# EUROPÄISCHE PATENTANMELDUNG

(11) **EP 2 383 854 A1**
(43) Veröffentlichungstag der Anmeldung: **02.11.2011**
(21) Anmeldenummer: 10305443.3
(22) Anmeldetag: 28.04.2010
(51) Int. Cl.: H02G 15/34

(54) **Anordnung mit einem supraleitfähigen Kabel**

(71) Anmelder: Nexans, 75008 Paris (FR)
(72) Erfinder: Schmidt, Frank, 30855, Langenhagen (DE); Lallouet, Nicolas, 62132 Fiennes (FR)
(74) Vertreter: Döring, Roger

(57) **Zusammenfassung**

Es wird eine Anordnung zur elektrisch leitenden Verbindung eines supraleitfähigen elektrischen Kabels (1) mit einem normalleitenden, auf Raumtemperatur befindlichen elektrischen Kabel angegeben, welche eine Durchführung (D) mit einem elektrischen Leiter (5) aufweist, der von einer thermischen Isolierung (6) umgeben ist. Der Leiter (1) des supraleitfähigen Kabels ist mit einem Ende des Leiters (5) der Durchführung (D) verbunden, an dessen anderes Ende das normalleitende Kabel anschließbar ist. Auf dem zum Anschluß an den Leiter (5) der Durchführung (D) bestimmten Ende des supraleitfähigen Kabels (1) ist eine der elektrischen Feldsteuerung dienende Elektrode (4) angebracht. Zumindest im Bereich der Elektrode (4) ist ein denselben umgebender Kryostat vorhanden, der als rundum geschlossene Hülle aus elektrisch isolierendem Material mit einer vakuumfreien, thermischen Isolierung ausgeführt ist. Das der Durchführung (D) zugewandte Ende der Hülle des Kryostats ist im Betriebszustand der Anordnung auf Hochspannungspotential gelegt, während das andere Ende der Hülle an Erdpotential angeschlossen ist.

## Beschreibung

Die Erfindung bezieht sich auf eine Anordnung zur elektrisch leitenden Verbindung eines supraleitfähigen elektrischen Kabels mit einem normalleitenden, auf Raumtemperatur befindlichen elektrischen Kabel, welche eine Durchführung mit einem elektrischen Leiter aufweist, die von einer thermischen Isolierung umgeben ist, bei welcher das supraleitfähige Kabel in einem rohrförmigen, zur Führung eines Kühlmittels dienenden Kryostat angeordnet ist und bei welcher der Leiter des supraleitfähigen Kabels mit einem Ende des Leiters der Durchführung verbunden ist, an dessen anderes Ende das normalleitende Kabel anschließbar ist (EP 1 811 626 A1).

Eine derartige Anordnung wird beispielsweise benötigt, um ein suproleitföhiges elektrisches Kabel mit einem elektrischen Stromverteilungsnetz zu verbinden. Supraleitfähige Kabel haben in heutiger Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise BSCCO (Wismut-Strontium-Kalzium-Kupfer-Oxid) als Material der 1. Generation oder ReBCO (Rareearth-Barium-Kupfer-Oxid), insbesondere YBCO (Yttrium-Barium-Kupfer-Oxid), als Materialien der 2. Generation. Ausreichend niedrige Temperaturen, um ein derartiges Material in den supraleitfähigen Zustand zu bringen, liegen beispielsweise zwischen 67 K und 90 K. Geeignete Kühlmittel sind beispielsweise Stickstoff, Helium, Neon und Wasserstoff oder Gemische dieser Stoffe. Zum Verbinden eines supraleitfähigen Kabels mit einem normalleitenden Kabel werden beispielsweise elektrische Durchführungen mit einem elektrischen Leiter eingesetzt, der von einer elektrisch wirksamen Isolierung umgeben ist. An den Leiter der Durchführung ist in einer betriebsbereiten Anordnung einerseits der Leiter des beispielsweise auf eine Temperatur von 70 K gekühlten supraleitfähigen Kabels und andererseits ein Kabel eines Stromverteilernetzes angeschlossen, das bei einer Umgebungstemperatur von etwa 20°C betrieben wird.

Die eingangs erwähnte EP 1 811 626 A1 beschreibt eine Anordnung mit einem aus drei Teilen bestehenden Gehäuse. Die Teile des Gehäuses sind nebeneinander bzw. übereinander angeordnet. Im mittleren Teil des Gehäuses ist eine Durchführung angebracht, die einen isolierten elektrischen Leiter aufweist. Auf der Isolierung des Leiters ist eine Feldsteuerschicht angeordnet, die beispielsweise aus einer an der äußeren Oberfläche derselben anhaftenden Schicht aus Zink besteht. Sie ist mit einem in der Hochspannungstechnik bekannten, den Leiter umgebenden Feldsteuerkonus verbunden. Der so bestückte Leiter der Vorrichtung ist in einen Isolierkörper eingebettet, der aus einem elektrisch isolierenden Material besteht. An einem Ende der Durchführung ist deren Leiter zur Verbindung mit einem Kabel des Stromversorgungsnetzes aus dem Isolierkörper herausgeführt, während sein anderes Ende zum Anschluß des supraleitfähigen Kabels dient, das von einem mit einer Vakuumisolierung ausgerüsteten, aus metallischen Rohren bestehenden Kryostat umgeben ist. Zwischen dem Leiter der Durchführung und dem elektrisch wirksamen Isolierkörper ist eine Zwischenschicht vorgesehen, die ein Gleiten des Leiters in dem Isolierkörper ermöglicht.

Der Erfindung liegt die Aufgabe zugrunde, die eingangs geschilderte Anordnung einfacher zu gestalten.

Diese Aufgabe wird gemäß der Erfindung dadurch gelöst,
- daß auf dem zum Anschluß an den Leiter der Durchführung bestimmten Ende des supraleitfähigen Kabels eine der elektrischen Feldsteuerung dienende Elektrode angebracht ist,
- daß der Kryostat zumindest im Bereich der Elektrode als rundum geschlossene Hülle aus elektrisch isolierendem Material mit einer vakuumfreien, thermischen Isolierung ausgeführt ist und
- daß das der Durchführung zugewandte Ende der Hülle des Kryostats im Betriebszustand der Anordnung auf Hochspannungspotential gelegt ist, während das andere Ende der Hülle an Erdpotential angeschlossen ist.

Die Hülle des Kryostats kann jede beliebige, sinnvolle geometrische Form haben. In bevorzugter Ausführungsform ist die Hülle als Rohrstück mit einem vorzugsweise zylindrischen Querschnitt ausgeführt. Im folgenden wird statt der Worte "rundum geschlossene Hülle" der Einfachheit halber das Wort "Rohrstück" verwendet.

Das Ende des mit einer der elektrischen Feldsteuerung dienenden Elektrode bestückten supraleitfähigen Kabels ist bei dieser Anordnung von einem Rohrstück eines Kryostats umgeben, das aus elektrisch wirksamem, mit einer vakuumfreien thermischen Isolierung versehenen Isoliermaterial besteht. Eine bei Kryostaten bekannter Bauart vorhandene, aufwendige Vakuumisolierung wird daher nicht benötigt. Es können vielmehr insbesondere für die Wärmeisolierung des Kryostats an sich bekannte Stoffe mit wärmeisolierenden Eigenschaften eingesetzt werden. Bei dem geschilderten Aufbau der Anordnung kann der Übergang des Leiters des supraleitfähigen Kabels auf Umgebungstemperatur ohne weitere elektrische Isolierung ausgeführt sein, da der Bereich dieses Übergangs im Betriebszustand der Anordnung auf Hochspannungspotential liegt. Der elektrische Leiter der Durchführung braucht daher nur noch von einem der thermischen Isolierung dienenden Isolierkörper umgeben zu sein. Die Anordnung kann insgesamt kompakt ausgeführt und einfach auch für hohe Ströme ausgelegt werden. Die am supraleitfähigen Kabel angebrachte, der elektrischen Feldsteuerung dienende Elektrode kann gleichzeitig zur Feldsteuerung für die Anordnung insgesamt verwendet werden.

Bei Anwendung der Anordnung für supraleitfähige Gleichstromkabel treten außerdem keine thermischen Probleme oder Raumladungsprobleme in festen Isolierstoffen auf, wie sie bei konventionellen Hochspannungs-Gleichstromkabeln mit festen Isolierstoffen bekannt sind.

Mit dem Wort "Hochspannung" sollen elektrische Spannungen erfaßt sein, die über 1 kV liegen. Im vorliegenden Fall werden im Bereich von 200 kV liegende Spannungen eingesetzt.

Die Anordnung wird in bevorzugter Ausführungsform in vertikaler Ausführung eingesetzt. Um in einer solchen Position von supraleitfähigem Kabel und umgebendem Rohrstück des Kryostats eine thermische Schichtung im Rohrstück zu vermeiden, wird das Kühlmittel mit Vorteil am obersten Punkt in das Rohrstück eingebracht. Das kann beispielsweise durch ein Rohr aus Isoliermaterial erreicht werden, das innerhalb des Rohrstücks das Kühlmittel auf Hochspannungspotential fördert.

Ein Ausführungsbeispiel des Erfindungsgegenstandes ist in den Zeichnungen dargestellt.

Es zeigen:
Fig. 1 in ein schematischer Darstellung das Ende eine Übertragungsstrecke mit einem supraleitfähigen Kabel.
Fig. 2 die Anordnung nach der Erfindung in vergrößerter Darstellung.

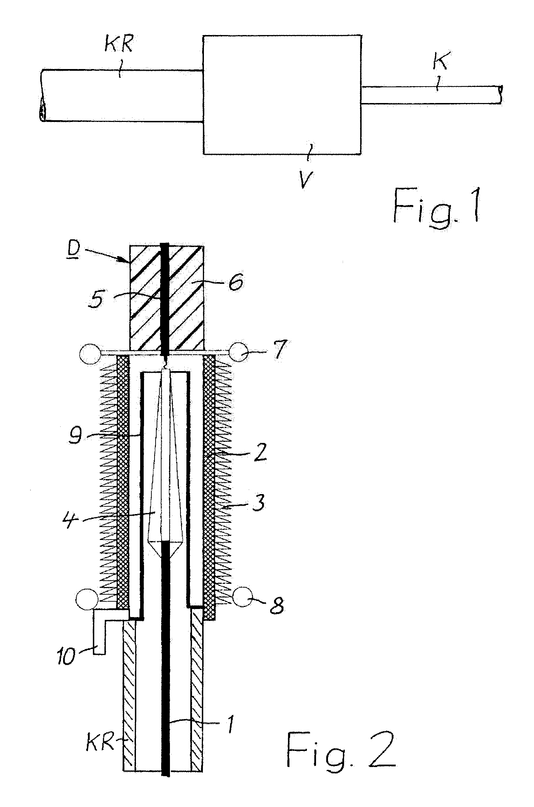

In Fig. 1 ist ein durch ein Rechteck wiedergegebener Endverschluß V einer mit einem supraleitfähigen elektrischen Kabel ausgerüsteten Übertragungsstrecke für elektrischen Strom angedeutet. An den Endverschluß V ist einerseits ein Kryostat KR angeschlossen, in dem ein in Fig. 2 eingezeichnetes, supraleitfähiges Kabel 1 enthalten ist. Andererseits ist ein normalleitendes elektrisches Kabel K mit dem Endverschluß V verbunden, das zu einem Stromversorgungsnetz gehört. Für die Verbindung zwischen supraleitfähigem Kabel 1 und normalleitendem Kabel K wird eine im Endverschluß V befindliche Anordnung verwendet, wie sie beispielsweise in Fig. 2 dargestellt ist.

Die Anordnung nach Fig. 2 ist am Ende des Kryostats KR angebracht. Sie kann grundsätzlich in horizontaler Ausführung eingesetzt werden. In bevorzugter Ausführungsform wird die Anordnung aber mit vertikalem Verlauf aufgebaut. Diese vertikale Ausführungsform ist in Fig. 2 dargestellt. Sie wird im folgenden - stellvertretend auch für eine horizontale Ausführung - beschrieben.

Die Anordnung nach Fig. 2 weist einen als Rohrstück 2 ausgeführten Kryostat auf, der aus einem elektrisch isolierenden Material besteht und vakuumfrei thermisch isoliert ist. Das Rohrstück 2 des Kryostats besteht beispielsweise aus glasfaserverstärktem Kunststoff. Zu seiner thermischen Isolierung kann das Rohrstück 2 des Kryostats - im folgenden nur noch kurz "Rohrstück 2" genannt - auf seiner äußeren Oberfläche mit einer durch Zickzacklinien angedeuteten Schicht 3 aus thermisch isolierendem Material versehen sein, beispielsweise mit geschäumtem Polyurethan. Das Rohrstück 2 ist an seinem unteren Ende beispielsweise mittels einer Flanschverbindung mit dem Kryostat KR der Übertragungsstrecke verbunden.

Das supraleitfähige Kabel 1 ist in dem Kryostat KR so angeordnet, daß es bis in das Rohrstück 2 hineinragt. Sein Ende ist von einer der elektrischen Feldsteuerung dienenden Elektrode 4 umgeben. Die Feldsteuerung kann als kapazitive Feldsteuerung auch als aus leitenden Einlagen gewickelte Anordnung ausgeführt sein. Der Leiter des Kabels 1 ist mit einem elektrischen Leiter 5 einer Durchführung D verbunden, der von einem ausschließlich der thermischen Isolierung dienenden Isolierkörper 6 umgeben ist. Mit seinem anderen Ende kann der Leiter 5 an das Kabel K des Stromversorgungsnetzes angeschlossen werden.

Auch das der Durchführung D zugewandte Ende des Rohrstücks 2 ist mit einem Flansch abgeschlossen. An dieses Ende des Rohrstücks 2 wird Hochspannung angelegt. Das ist durch in Fig. 2 eingezeichnete Abschirmringe 7 angedeutet. Der Übergangsbereich zwischen Rohrstück 2 und Durchführung D befindet sich also im Betriebsfall auf Hochspannungspotential. An dem Ende der Durchführung D abgewandten Ende des Rohrstücks 2 sind auf Erdpotential liegende Abschirmringe 8 vorhanden.

Das Kühlmittel wird dem Rohrstück 2 zur Vermeidung einer thermischen Schichtung und von Gasblasen mit Vorteil an seinem obersten Punkt zugeführt, also im Hochspannungsbereich. Das kann grundsätzlich auf beliebige Art und Weise durchgeführt werden. In bevorzugter Ausführungsform ist jedoch für den Kühlmittelzulauf im Rohrstück 2 ein aus Isoliermaterial bestehendes Rohr 9 angeordnet, das bis in den Bereich des oberen Endes des Rohrstücks 2 ragt und dem das Kühlmittel über einen Zulauf 10 aufgegeben wird.

## Patentansprüche

1. Anordnung zur elektrisch leitenden Verbindung eines supraleitfähigen elektrischen Kabels mit einem normalleitenden, auf Raumtemperatur befindlichen elektrischen Kabel, welche eine Durchführung mit einem elektrischen Leiter aufweist, der von einer thermischen Isolierung umgeben ist, bei welcher das supraleitfähige Kabel in einem rohrförmigen, zur Führung eines Kühlmittels dienenden Kryostat angeordnet ist und bei welcher der Leiter des supraleitfähigen Kabels mit einem Ende des Leiters der Durchführung verbunden ist, an dessen anderes Ende das normalleitende Kabel anschließbar ist, **dadurch gekennzeichnet,**
- **daß** auf dem zum Anschluß an den Leiter (5) der Durchführung (D) bestimmten Ende des supraleitfähigen Kabels (1) eine der elektrischen Feldsteuerung dienende Elektrode (4) angebracht ist,
- **daß** der Kryostat (KR) zumindest im Bereich der Elektrode (4) als rundum geschlossene Hülle aus elektrisch isolierendem Material mit einer vakuumfreien, thermischen Isolierung ausgeführt ist und
- **daß** das der Durchführung (D) zugewandte Ende der Hülle des Kryostats im Betriebszustand der Anordnung auf Hochspannungspotential gelegt ist, während das andere Ende der Hülle an Erdpotential angeschlossen ist.

2. Anordnung nach Anspruch 1, **dadurch gekennzeichnet, daß** die Hülle des Kryostats auf ihrer äußeren Oberfläche mit einer Schicht (3) aus vakuumfreiem thermisch isolierendem Material versehen ist.

3. Anordnung nach Anspruch 1 oder 2, **dadurch gekennzeichnet, daß** der Zuführungspunkt für die Zuführung des Kühlmittels in den Kryostat an dem der Durchführung zugewandten Ende der Hülle angeordnet ist.

4. Anordnung nach Anspruch 3, **dadurch gekennzeichnet, daß** zur Zuführung des Kühlmittels im Innern der Hülle des Kryostats ein aus Isoliermaterial bestehendes Rohr (9) angeordnet ist.

5. Anordnung nach einem der Ansprüche 1 bis 4, **dadurch gekennzeichnet, daß** die Hülle des Kryostats als Rohrstück (2) ausgeführt ist.

## Geänderte Patentansprüche

### Geänderte Patentansprüche gemäss Regel 137(2) EPÜ.

**1.** Anordnung zur elektrisch leitenden Verbindung eines supraleitfähigen elektrischen Kabels mit einem normalleitenden, auf Raumtemperatur befindlichen elektrischen Kabel, welche eine Durchführung (D) mit einem elektrischen Leiter (5) aufweist, der von einer thermischen Isolierung umgeben ist, bei welcher das supraleitfähige Kabel (1) in einem rohrförmigen, zur Führung eines Kühlmittels dienenden Kryostat (KR) angeordnet ist und bei welcher der Leiter des supraleitfähigen Kabels mit einem Ende des Leiters (5) der Durchführung (D) verbunden ist, an dessen anderes Ende das normalleitende Kabel anschließbar ist, **dadurch gekennzeichnet,**
- **daß** auf dem zum Anschluß an den Leiter (5) der Durchführung (D) bestimmten Ende des supraleitfähigen Kabels (1) in an sich bekannter Weise eine der elektrischen Feldsteuerung dienende Elektrode (4) angebracht ist,
- **daß** das Ende des Kabels von einer als Rohrstück ausgeführten, rundum geschlossenen Hülle aus elektrisch isolierendem Material mit einer vakuumfreien, thermischen Isolierung umgeben ist, die auf ihrer äußeren Oberfläche mit einer Schicht (3) aus vakuumfreiem, thermisch isolierendem Material versehen ist, und
- **daß** das der Durchführung (D) zugewandte Ende der Hülle im Betriebszustand der Anordnung auf Hochspannungspotential gelegt ist, während das andere Ende derselben an Erdpotential angeschlossen ist.

**2.** Anordnung nach Anspruch 1, **dadurch gekennzeichnet, daß** der Zuführungspunkt für die Zuführung des Kühlmittels in den Kryostat (KR) an dem der Durchführung (D) zugewandten Ende der Hülle angeordnet ist.

**3.** Anordnung nach Anspruch 2, **dadurch gekennzeichnet, daß** zur Zuführung des Kühlmittels im Innern der Hülle des Kryostats ein aus Isoliermaterial bestehendes Rohr (9) angeordnet ist.
